(19)

**Europäisches Patentamt**

**European Patent Office**

**Office européen des brevets**

(11) **EP 4 787 667 A2**

# (12) EUROPEAN PATENT APPLICATION

(43) Date of publication:
**05.08.2026 Bulletin 2026/32**

(21) Application number: **26154636.0**

(22) Date of filing: **28.01.2026**

(51) International Patent Classification (IPC):
**H02J 50/00** (2016.01)

(52) Cooperative Patent Classification (CPC):
**H02J 50/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.01.2025 US 202519042249**

(71) Applicant: **Avago Technologies International
Sales
Pte. Limited
Singapore 768923 (SG)**

(72) Inventors:
- **Greenwood, Stephen Francis**
 Fort Collins, 80524 (US)
- **Desrosiers, Ryan Michael**
 Fort Collins, 80528 (US)

(74) Representative: **Dilg, Haeusler, Schindelmann
Patentanwaltsgesellschaft mbH
Leonrodstraße 58
80636 München (DE)**

(54) **ARCHITECTURE FOR SUPPRESSING SYSTEM CURRENT VARIATION**

(57) A power transceiver includes a current sense circuit, a ballast actuator and a ballast regulator. In response to measuring an amount of rectified current flowing along a pathway from an input terminal to an output terminal, the current sense circuit generates a sense signal that indicates the amount of the rectified current. The ballast actuator draws an amount of a ballast current from the rectified current from the output terminal. The ballast regulator performs a comparison of the sense signal with a reference signal. In response to the comparison indicating that the rectified current is at or above a transition point where a current level of the rectified current reaches a shift current, the ballast regulator triggers the ballast actuator to decrease the amount of the ballast current drawn from the output terminal.

## FIG. 3A

EP 4 787 667 A2

**Description**

**BACKGROUND**

A wireless power system is a system that transfers electrical energy from a transmitter to a receiver using electromagnetic fields or radio waves. These systems operate through methods such as inductive coupling, resonant inductive coupling, radio frequency (RF) energy transfer, and microwave or laser power transmission.

**BRIEF DESCRIPTION OF DRAWINGS**

The accompanying drawings, which form part of this specification, depict examples of the disclosure and, along with the description, illustrate the underlying principles of these examples. The detailed description is provided with reference to the accompanying figures. In the figures, the leading digit(s) of each reference number correspond to the figure where the reference number first appears. The figures may not be drawn to scale, and certain proportions or elements may be exaggerated in some figures to enhance the clarity of specific features.

FIG. 1 illustrates an exemplary power transfer system, in accordance with one or more embodiments of the disclosure.

FIG. 2 illustrates an exemplary current regulator, in accordance with one or more embodiments of the disclosure.

FIGS. 3A and 3B illustrate an exemplary current regulator, in accordance with one or more embodiments of the disclosure.

FIGS. 4A and 4B illustrate exemplary transfer characteristics graphs, in accordance with one or more embodiments of the disclosure.

FIGS. 5A and 5B illustrate exemplary transfer characteristics graphs, in accordance with one or more embodiments of the disclosure.

FIGS. 6A and 6B illustrate exemplary transfer characteristics graphs, in accordance with one or more embodiments of the disclosure.

In the drawings, like reference symbols and numerals indicate the same or similar components. Like elements in the various figures are denoted by like reference symbols and numerals for consistency. Identical or similar items across different figures are indicated by the same reference numbers. Unless otherwise indicated, like elements and method steps are referred to with like reference numerals.

**DETAILED DESCRIPTION OF THE INVENTION**

The following describes technical solutions in this specification with reference to the accompanying drawings. Exemplary embodiments are described in detail with reference to the accompanying drawings.

In some wireless power systems, Amplitude Shift Keying (ASK) communication from a receiver to a transmitter can be achieved through a process such as load modulation. In this process, a current source can draw different current levels from a rectifier block to transmit a binary 1 or 0. However, when a system load current-an uncontrolled and rectified current applied to the rectifier by the system-is present, the ASK signal-to-noise ratio (SNR) can degrade or become corrupted if the system load current spectrum overlaps with the ASK modulation spectrum. This can occur because the ASK current pulses and the system load current are combined at the rectifier input, making it difficult for the transmitter to distinguish between the receiver's ASK communication pulses and the background system current. As a result, the system load current can appear as noise or mimic a separate modulation pulse train, thereby interfering with and corrupting the ASK communication. Accordingly, there is a need in the art for an improved power transceiver.

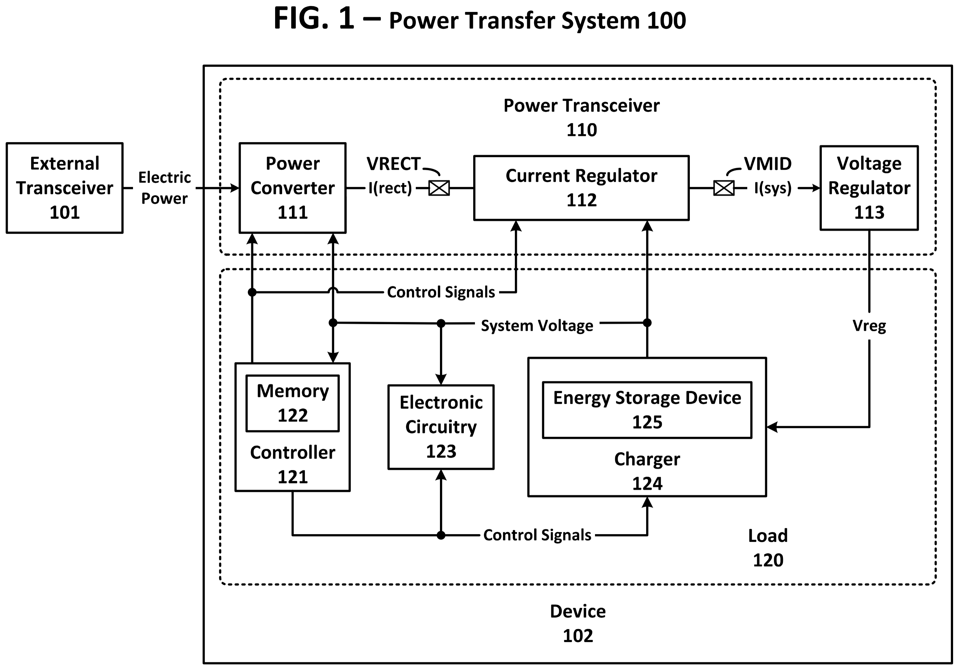

FIG. 1 illustrates an example power transfer system 100. The power transfer system 100 may include external transceiver 101 and device 102. Device 102 is removable from external transceiver 101. In some examples, device 102 may receive power from external transceiver 101. Device 102 may also receive information from external transceiver 101. In other examples, device 102 may output power to external transceiver 101. Device 102 may also transmit information to external transceiver 101.

Device 102 may be configured as any type of electrically powered device. For example, device 102 may be configured as a mobile communication device including, but not limited to, a mobile phone, a smart phone, cell phone, or tablet. Device 102 may be configured as a wearable device, a smartwatch, a fitness tracker or a personal digital assistant (PDA). In other examples, device 102 may be configured as a media device (e.g., media playing and/or recording device). For instance, device 102 may include portable music player, an audio device such as an audio recorder, an audio converter, an audio player, or a speaker (e.g., a Bluetooth-enabled speaker). In other instances, device 102 may include a video device such as a video display, a video recorder, a camera, or other video device. In another example, device 102 may be configured as, a driver assistance module in a vehicle, a light detection and ranging (LiDAR) sensor, an emergency transponder, a pager, a watch, a satellite television receiver, a stereo receiver, a computer system, music player, laptop or tablet computer, home appliance, or virtually any other device. In another example, device 102 may be configured as a computer (e.g., a laptop computer). In other examples, device 102 may be configured as a computing/entertainment device for a vehicle.

Device 102 may include power transceiver 110 and load 120. Power transceiver 110 may condition electric power in response to receiving the electric power from external transceiver 101. Electric power from external transceiver 101 may be AC (alternating current) power. In response to conditioning electric power, power transceiver 110 may convert electric power into voltage (Vreg) and output voltage (Vreg) to load 120. Voltage (Vreg) is a DC voltage. In response to power transceiver 110 conditioning electric power, power transceiver 110 may convert electric power into voltage (Vreg) for downstream usage in load 120. Power transceiver 110 may also output information to external transceiver 101. An integrated circuit chip may include power transceiver 110 in some examples.

Power transceiver 110 is circuitry that may condition and transform electric power into voltage (Vreg). Power transceiver 110 may include power converter 111, current regulator 112 and voltage regulator 113.

Power converter 111 is circuitry that may convert the electric power into a rectified current I(rect). By way of example, external transceiver 101 may supply the electric power to device 102. Power converter 111 may receive the electric power from external transceiver 101. In some implementations, power converter 111 may receive the electric power from external transceiver 101 wirelessly. In response to receiving the electric power, power converter 111 may rectify the electric power so as to convert the electric power into rectified current I(rect).

Current regulator 112 is an apparatus that may manage current flowing along a pathway in power transceiver 110.

Voltage regulator 113 is circuitry that may receive system current I(sys) at an output terminal (VMID) and convert system current I(sys) into voltage (Vreg). Voltage regulator 113 may happen to be a current-to-voltage converter that converts system current I(sys) into a proportional voltage (Vreg). In response to converting system current I(sys) into voltage (Vreg), voltage regulator 113 may maintain voltage (Vreg) at a voltage level despite any fluctuation in system current I(sys) and despite any fluctuation of any loading condition produced by load 120. Voltage regulator 113 may output voltage (Vreg) to load 120 at the voltage level despite any fluctuation in the voltage level of voltage (Vreg).

Load 120 may include controller 121, memory 122, electronic circuitry 123, charger 124 and energy storage device 125.

Controller 121 is electronic hardware implemented as any suitable processing circuitry. The processing circuitry may include, but not limited to, at least one of a microcontroller, a microprocessor, a single processor, and a multiprocessor. Controller 121 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Controller 121 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals. As will be explained in detail, controller 121 may control the functions and circuitry of power transceiver 110.

Memory 122 may be a non-transitory machine-readable storage medium. The non-transitory machine-readable storage medium may be a non-transitory processor readable or computer readable storage medium. The non-transitory machine-readable storage medium may comprise read-only memory ("ROM"), random access memory ("RAM"), other non-transitory computer-readable media and/or a combination thereof. Memory 122 may be any electronic, magnetic, optical, or other physical storage device. Memory 122 may store executable instructions for device 102. In some examples, the executable instructions may be in the form of software and/or firmware. The software for device 102 may include program code. The program code may include program instructions that are readable and executable by controller 121, also referred to as machine-readable instructions. Memory 122 may also store data, filters, rules and/or a combination thereof.

Electronic circuitry 123 may include electrical components and pathways within load 120 that consume power from voltage regulator 113. The electrical components may include, but are not limited to, resistive, inductive and/or capacitive elements. For example, electronic circuitry 123 may include combination of active components and passive components that collectively establishes the performance of load 120 while causing load 120 to consume power. The active components may include, but are not limited to, transistors and integrated circuits. The active components may include, but are not limited to, inductors, resistors and capacitors.

Charger 124, which is downstream from power transceiver 110, is circuitry that may perform DC-to-DC conversion on voltage (Vreg). In response to performing the DC-to-DC conversion, charger 124 may transform voltage (Vreg) into an adjusted DC voltage. The adjusted DC voltage is a voltage having a voltage level that differs from the voltage level for voltage (Vreg). Charger 124 may perform charging of energy storage device 125. In response to charging energy storage device 125, charger 124 may store the adjusted DC voltage in energy storage device 125. Energy storage device 125 may include a battery and/or a battery pack.

Charger 124 may also manage electrical energy that is stored in energy storage device 125. In response to managing the electrical energy that is stored in energy storage device 125, charger 124 may convert the electrical energy into a system voltage. The system voltage is a DC voltage. Charger 124 may output the system voltage to electronic circuitry 123, power transceiver 110 and controller 121. Power transceiver 110, electronic circuitry 123 and controller 121 may receive the system voltage from charger 124. In addition, charger 124 may output the system voltage to electronic circuitry 123, power transceiver 110 and controller 121. The system voltage may power up controller 121, electronic circuitry 123, charger 124 and power transceiver 110.

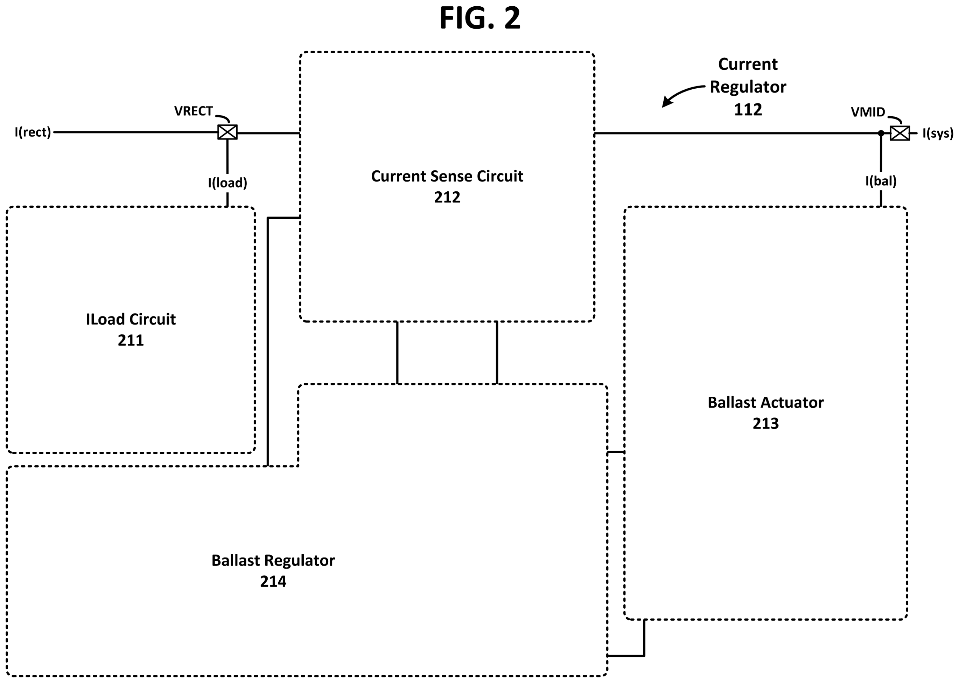

Turning now to FIG. 2, a block diagram of current regulator 112 is illustrated. Current regulator 112 may include ILoad circuit 211, current sense circuit 212, ballast actuator 213 and ballast regulator 214. Those skilled in the art will appreciate there may be additional components in current regulator 112.

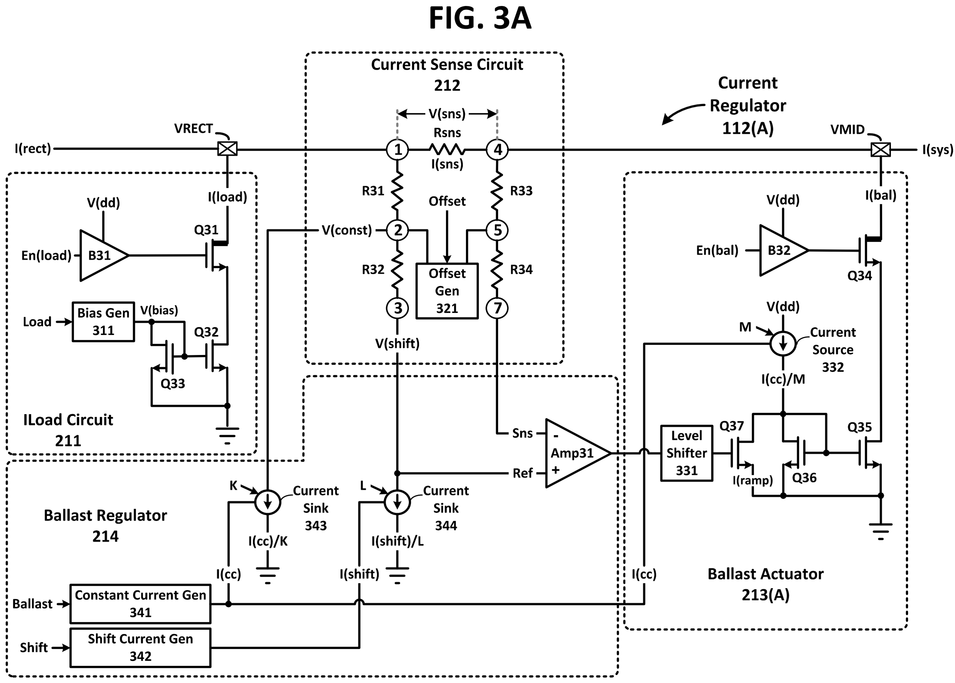

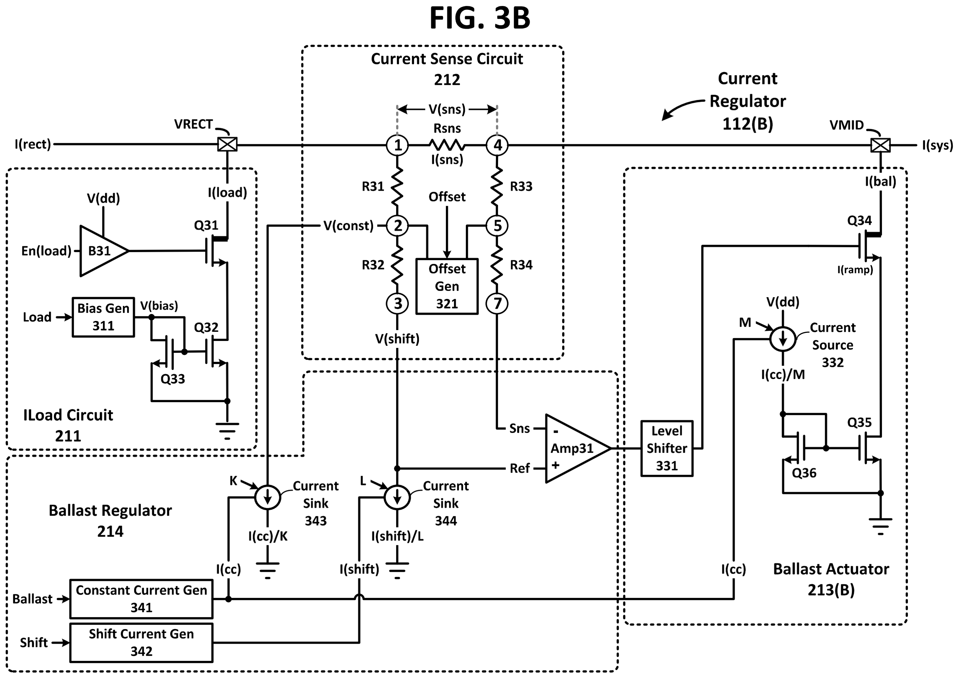

FIGS. 3A and 3B are schematic diagrams illustrating current regulator 112. FIG. 3A may illustrate an exemplary current regulator 112(A) whereas FIG. 3B may illustrate an exemplary current regulator 112(B). Any one of current regulator 112(A) and current regulator 112(B) may be individually referred to herein as current regulator 112.

In current regulator 112, transistors Q31-Q37 may each be implemented as an N-type metal-oxide-semiconductor (NMOS) transistor. In some configurations, transistors Q31, Q34 may each be a protection transistor. For example, transistors Q31, Q34 may each be an N-type laterally-diffused metal-oxide semiconductor (LDNMOS) transistor. In other configurations, any of the transistors Q31, Q34 may happen to be a non-LDNMOS transistor. Any of the transistors Q31-Q37 may be implemented as a Field Effect Transistor (FET), a bipolar transistor, a P-type metal-oxide-semiconductor (PMOS) transistor, or any other transistor device.

Transistor Q31 may be a high-voltage transistor and transistor Q32 may be a low-voltage transistor. In particular, transistor Q31 may be a protection transistor that provides voltage protection and output impedance boost for transistor Q32. Alternative implementations with different voltage tolerance levels for transistor Q31 and transistor Q32 may be envisioned to support different voltage levels for a transfer of electric power.

Transistor Q34 may be a high-voltage transistor and transistor Q36 may be a low-voltage transistor. In particular, transistor Q34 may be a protection transistor that provides voltage protection and output impedance boost for transistor Q36. Alternative implementations with different voltage tolerance levels for transistor Q34 and transistor Q36 may be envisioned to support different voltage levels for wireless power transfer.

In FIGS. 3A and 3B, ILoad circuit 211 may include buffer B31, bias generator 311 and transistors Q31-Q33. The drain of transistor Q31 is electrically connected to an input terminal (VRECT) and the gate of the transistor Q31 is electrically connected to the output of buffer B31. Buffer B31 may apply a voltage to the gate of transistor Q31 that causes transistor Q31 to remain conductive and draw an amount of load current I(load) from the input terminal (VRECT). A current mirror may include mirror transistor Q32 and bias transistor Q33. In some implementations, there is a 1:M ratio in size between Q32 and Q33.

The current mirror of transistors Q32-Q33 may perform as a current sink that provides a programmable current load to the upstream power converter 111, whose output is connected to the input terminal (VRECT). For example, the gates of transistors Q32, Q33 are commonly connected. Similarly, the sources of transistors Q32, Q33 are also commonly connected and are electrically connected to ground. The drain of transistor Q32 is electrically connected to the source of transistor Q31.

Bias generator 311 is circuitry that may set a bias voltage V(bias) for the current mirror of transistors Q32, Q33. By way of illustration, bias generator 311 may receive "load" from controller 121 in the form of a digital word. Load current scale factor "Load" is a predetermined user setting that represents a setpoint for load current I(load). In some cases, power transceiver 110 may employ the load current I(load) to implement part of a wireless communication link between external transceiver 101 and power transceiver 110. In such instances, controller 121 may vary the binary value for load current scale factor "Load" to adjust the setpoint for load current I(load). Bias generator 311 may convert load current scale factor "Load" into a bias voltage V(bias) and output the bias voltage V(bias) to the drain of transistor Q33 and to the gates of transistors Q32, Q33.

Current regulator 112(A) may illustrate an exemplary ballast actuator 213(A) whereas current regulator 112(B) may illustrate an exemplary ballast actuator 213(B). Any one of ballast actuator 213(A) and ballast actuator 213(B) may be individually referred to herein as ballast actuator 213.

In FIG. 3A, ballast actuator 213(A) may include buffer B32, level shifter 331 and transistors Q34-Q37. In FIG. 3B, ballast actuator 213(B) may include buffer B32, level shifter 331 and transistors Q34-Q36. Any one of current regulator 112(A) and current regulator 112(B) may be individually referred to as current regulator 112.

As previously mentioned, ballast actuator 213(A) may include buffer B32, level shifter 331 and transistors Q34-Q37 in FIG. 3A. In FIG. 3B, ballast actuator 213(B) may include buffer B32, level shifter 331 and transistors Q34-Q36. The drain of transistor Q34 is electrically connected to the output terminal (VMID). The source of transistor Q34 is electrically connected to transistor Q35. A current mirror may include mirror transistor Q35 and bias transistor Q36. For example, the gates of transistors Q35, Q36 are commonly connected. Similarly, the sources of transistors Q35, Q36 are also commonly connected and are electrically connected to ground. Current source 332 is electrically connected to the drain of transistor Q36 and to the gates of transistors Q35, Q36. The current mirror of transistors Q32, Q33 may draw an amount of ballast current I(bal) to ground. In some implementations, a 1:M ratio in size may exist between Q35 and Q36. As such, when current source 332 applies Icc/M to the drain of Q36, the current in the drain of Q35 is $I_{CC}/M*M$ = Icc.

Current sense circuit 212 may include offset generator 321, resistor Rsns and resistors R31-R34. Wiring nodes 1-7 are also illustrated in current sense circuit 212. Each of the wiring nodes 1-7 may be implemented as a conductive region of current sense circuit 212. For instance, each of the wiring nodes 1-7 may include one or more wires or conductive traces that link together various components of current sense circuit 212. Those skilled in the art will appreciate there may be additional components in current sense circuit 212.

Current sense circuit 212 is circuitry that may measure an amount of rectified current I(rect) flowing along a pathway from the input terminal (VRECT) to the output terminal (VMID). For instance, current sense circuit 212 may detect an amount of sense current I(sns) flowing from wiring node 1 to wiring node 4 through resistor Rsns to measure the amount of rectified current I(rect). On such occasions, current sense circuit 212 may detect a voltage drop V(sns) across resistor Rsns to detect the amount of sense current I(sns) flowing through resistor Rsns. Current sense circuit 212 may, in response to detecting the amount of sense current I(sns), generate a sense signal (Sns) that indicates the detected amount of sense current I(sns) flowing along the pathway. According, the sense signal (Sns) may indicate the amount of rectified current I(rect) flowing along the pathway from the input terminal (VRECT) to the output terminal (VMID).

Resistor Rsns is between the input terminal (VRECT) and the output terminal (VMID). Resistors R31, R33 are a matching pair of balanced resistors. As balanced resistors, resistors R31, R33 are each of a same ohmic value. In some implementations, resistors R31, R33 may each have an ohmic value of K*Rsns where "K" is a scale factor and "Rsns" is the ohmic value of resistor Rsns. Constant current scale factor "K" is of a value that differs from ballast scale factor "M."

Resistors R32, R34 are another matching pair of balanced resistors. As a balanced resistors, resistors R32, R34 are each of a same ohmic value. In some implementations, resistors R32, R34 may each have an ohmic value of (L-K)*Rsns where "L" is another scale factor whose value differs from constant current scale factor "K" and ballast scale factor "M" is of a value that differs from shift current scale factor "L."

In various embodiments, resistor Rsns is of an ohmic value that ensures a significant amount of rectified current I(rect) may flow from the input terminal (VRECT) to the output terminal (VMID) without degrading the performance characteristics of power transceiver 110. For instance, an ohmic value of resistor R31 is substantially greater than resistance of resistor Rsns. In some implementations, the ohmic value of resistor R31 may happen to be at least 1000 times greater than the ohmic value of resistor Rsns. The ohmic value of resistor R31 being at least 1000 times greater than the ohmic value of resistor Rsns may ensure that the amount of current flowing through the resistor R31 is smaller than the amount of sense current I(sns) flowing through resistor Rsns. Similarly, the ohmic value of resistor R33 being at least 1000 times greater than the ohmic value of resistor Rsns may ensure that the amount of current flowing through the resistor R33 is also smaller than the amount of sense current I(sns) flowing through resistor Rsns.

Offset generator 321 is circuitry that may generate an offset cancellation voltage that corrects any input offset from amplifier Amp31. Referred to herein, "input offset" is a small unwanted voltage difference that could appear in some instances between the non-inverting input terminal (+) and inverting input terminal (-) of an operation amplifier, even when the non-inverting and inverting input terminals are both supposed to be at the same voltage. Internal mismatches of an operation amplifier could quite possibly introduce input offset, causing errors in the output of the operation amplifier. Applied to the non-inverting input terminal (+) and inverting input terminal (-) of the operation amplifier, the offset cancellation voltage is a corrective voltage that reduces or removes output errors caused by input offset.

Referring to FIGS. 3A and 3B, offset generator 321 may receive "offset" from controller 121 in the form of a digital word. The digital word "offset" may cause offset generator 321 to apply the offset cancellation voltage to wiring nodes 2 and 5. The offset cancellation voltage is a differential voltage. Referred to herein, a differential voltage is a voltage difference between wiring nodes 2 and 5. This differential voltage is then transferred to the input of amplifier Amp31. Controller 121 may dynamically vary the binary value for the digital word "offset" to adjust the voltage level of the offset cancellation voltage.

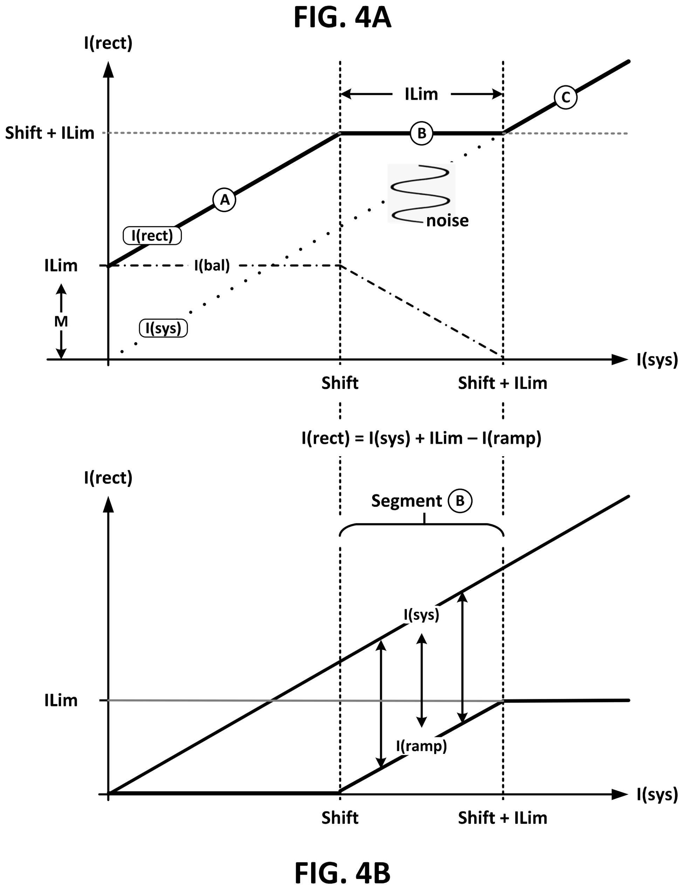

Turning now to FIGS. 4A and 4B, transfer characteristics graphs for a ballast shift feature are illustrated. Ballast regulator 214 may compare variations in rectified current I(rect) to corresponding variations in system current I(sys), as illustrated in the transfer characteristics graph of FIG. 4A. The curve in the transfer characteristics graph of FIG. 4A illustrates a relationship between rectified current I(rect) and system current I(sys). For instance, the vertical axis of the graphs represents rectified current I(rect). The horizontal axis of the graphs represents system current I(sys) that may flow to the output terminal (VMID).

Ballast scale factor "M" may represent a setpoint for a ballast limit (ILim). Referred to herein, "ballast limit" is a small, steady bias current used by power converter 111 to enhance response time, stability and sensitivity of power converter 111. Ballast limit (ILim) is the maximum amount of ballast current I(bal) that ballast actuator 213 may draw from the output terminal (VMID). In some implementations, the ballast limit (ILim) is a predetermined current level. Ballast actuator 213 may safeguard against rectified current I(rect) falling below the ballast limit (ILim), regardless of any changes in system current I(sys), as will be explained in detail.

Current source 332 may also transform a voltage V(dd) into a drive current whose current level is I(cc)/M. As illustrated in FIG. 4A, the sum total of ballast current I(bal) + system current I(sys) may set the ballast for power converter 111.

The curve in the transfer characteristics graph of FIG. 4A includes segments A-C. Components that contribute to the formation of the transfer characteristics graph are illustrated in FIG. 4B.

Segment "A" of the curve in FIG. 4A shows a linear relationship between rectified current I(rect) and system current I(sys), indicating proportionality between rectified current I(rect) and system current I(sys) in segment "A" until a current level of system current I(sys) reaches shift current I(shift).

Segment "B" of the curve commences at the point where a current level of system current I(sys) reaches shift current I(shift), as illustrated in FIG. 4A. In segment "B," rectified current I(rect) remains constant despite any variance or noise in system current I(sys). "Noise" is referred to herein as the unpredictable, unwanted and/or random fluctuations that may occur in an electrical current from the system. Whenever the current level of system current I(sys) is within segment "B" of the curve, ballast actuator 213 may adjust the amount of ballast current I(bal) drawn to ground by decreasing or increasing ballast current I(bal) in inverse proportion to the current level of system current I(sys). By way of example, FIG. 4A illustrates segment "B" of the curve where rectified current I(rect) will remain unaffected by noise that may happen to be present in system current I(sys).

Ballast regulator 214 may include constant current generator 341, shift current generator 342, current sinks 343-344 and amplifier amp31. Those skilled in the art will appreciate there may be additional components in ballast regulator 214.

Constant current generator 341 is circuitry that may receive "Ballast" from controller 121 in the form of a digital word. The digital word "Ballast" is a predetermined user setting that may cause an amount of constant current I(cc)/M and I(cc)/K to appear at current source 332 and current sink 343, respectively. Accordingly, the amount of constant current I(cc) is a programmable amount.

Shift current generator 342 is circuitry that may receive "Shift" from controller 121 in the form of a digital word. The digital word "Shift" is a predetermined user setting that may cause an amount of shift current I(shift) to appear at current sink 344. Accordingly, the amount of shift current I(shift) is a programmable amount.

Amplifier Amp31 is an operational amplifier with a non-inverting input terminal (+) and an inverting input terminal (-). To generate a drive voltage, amplifier Amp31 may compare the sense signal (Sns) at the inverting input terminal (-) with a reference signal (ref) at the non-inverting input terminal (+). Amplifier Amp31 may reject any common-mode noise that may be present on both the inverting and non-inverting input terminals. The drive voltage is proportional to a difference between the sense signal (Sns) and the reference signal (ref).

Level shifter 331 in ballast actuator 213 may adjust the drive voltage from amplifier amp31 to a voltage that is suitable for causing transistor Q37 to modulate the current level of ramp current I(ramp) in the manner illustrated in FIG. 4B. By modulating the current level of ramp current I(ramp), ballast actuator 213 may draw, from the output terminal (VMID), an amount of amount of ballast current I(bal) in proportion to an amount of rectified current I(rect).

The examples of FIGS. 3A and 3B illustrate a direct electrical connection between level shifter 331 and amplifier Amp31. Amplifier Amp31 may output the drive voltage to level shifter 331 along the direct electrical connection.

In ballast actuator 213(A), the output of level shifter 331 is electrically connected to the gate of transistor Q37. Ramp current I(ramp) in ballast actuator 213(A) may happened to be a drain-source current in transistor Q37. Also in ballast actuator 213(A), buffer B32 may receive signal en(bal) from controller 121. Signal en(bal) may happen to be a voltage of a fixed, unvarying voltage level. Onto the gate of transistor Q34, buffer B32 may output a fixed, unvarying voltage that causes transistor Q34 to remain conductive and draw an amount of ballast current I(bal) from the output terminal (VMID).

Differences between ballast actuators 213(A) and 213(B) may include the elimination of transistor Q37 from ballast actuator 213(B) and the output of level shifter 331 being electrically connected to the gate of Q34 in ballast actuator 213(B). Level shifter 331 in ballast actuator 213(B) may adjust the drive voltage from amplifier Amp31 to a voltage that is suitable for driving the gate of Q34 in such a fashion that ramp current I(ramp) in ballast actuator 213(B) is a drain-source current in transistor Q35.

The drive voltage from amplifier Amp31 being proportional to the difference between the sense signal (Sns) and the reference signal (ref) may trigger ballast actuator 213 to adjust the amount of ballast current I(bal) in segment "B" by an amount that is inversely proportional to the difference between the sense signal (Sns) and the reference signal (ref). For example, an increasing difference between the sense signal (Sns) and the reference signal (ref) may trigger ballast actuator 213 to increase the current level of ramp current I(ramp), thereby decreasing the amount of ballast current I(bal) by a reduced amount. The reduced amount is an amount that is proportional to an increase in ramp current I(ramp).

Conversely, a decreasing difference between the sense signal (Sns) and the reference signal (ref) may trigger ballast actuator 213 to reduce the current level of ramp current I(ramp), thereby increasing the amount of ballast current I(bal) by an amount that is proportional to a decrease in ramp current I(ramp). In segment "B" of the curve, the sum of ramp current I(ramp) and system current I(sys) remains constant, as illustrated in FIG. 4B.

Segment "B" of the curve commences at a transition point where the current level of rectified current I(rect) reaches a shift current setpoint (shift) and ends at a transition point where the current level of system current I(sys) equals the sum total of the shift current setpoint (shift) plus the ballast limit (ILim), as illustrated in the example of FIG. 4A.

Segment "C" of the curve in the transfer characteristics graph of FIG. 4A shows a linear relationship between rectified current I(rect) and system current I(sys), indicating proportionality between rectified current I(rect) and system current I(sys). In this region, ballast actuator 213 has increased the current level of ramp current I(ramp) to be equal to I(cc)/M effectively reducing the ballast actuator 213 current to zero. Thus, in region C, the I(rect) current is equal to system current I(sys).

Current sink 343 may receive constant current I(cc) from constant current generator 341. I(cc), controlled by the digital word "Ballast" at the input of constant current generator 341, is a setpoint for constant current ILim on the horizontal axis of the transfer characteristics graphs of FIGS. 4A-4B, 6A-6B and 5A-5B. Accordingly, current sink 343 may draw, from wiring node 1 to ground through resistor R31, a portion of rectified current I(rect) in the amount of I(cc)/K so that:

$$R31 = K * Rsns \tag{1}$$

$$\text{constant current voltage } V(const) = (I(cc)/K) * R31 \tag{2}$$

$$= (I(cc)/K) * (K*Rsns)$$

$$= I(cc) * Rsns$$

Current sink 344 may receive shift current I(shift) from shift current generator 342. The digital word "Shift" at the input of the Shift Current Generator 342 is a setpoint for shift current I(shift) on the horizontal axis of the transfer characteristics graphs of FIGS. 4A-4B, 6A-6B and 5A-5B.

Current sink 344 may draw, from wiring node 3 to ground through resistors R31 and R32, a portion of rectified current I(rect) in the amount of I(shift)/L so that:

$$R31 = K * Rsns \tag{3}$$

$$R32 = (L-K) * Rsns \tag{4}$$

$$\text{shift voltage } V(shift) = (I(shift)/L) * (R31 + R32) \tag{5}$$

$$= (I(shift)/L) * [(K*Rsns) + ((L-K) * Rsns)]$$

$$= (I(shift)/L) * (L*Rsns)$$

$$= I(shift) * Rsns$$

Resistors R31 and R32 are in series, as illustrated in the example of FIGS. 3A and 3B. A portion of rectified current I(rect) flowing through resistors R31 and R32 that may happen to be drawn through wiring nodes 1-3 may include a portion attributable to shift current I(shift) and a portion attributable to constant current I(cc). Instead of resistors R31 and R32 being a single resistor, dividing the ohmic values of resistors R31 and R32 into two resistors may offer benefits that include a reduction of any power dissipation that is attributable to the shift current I(shift) component along with an enhance accuracy of the drive voltage (from amplifier amp31) that is attributable to the constant current I(cc) component.

Along with the previously mentioned benefits of dividing the ohmic values of resistors R31 and R32 into two resistors, ballast regulation enabled by the programmability of shift current I(shift) and constant current I(cc) may provide additional advantages as illustrated by the example of FIGS. 4A-4B, 6A-6B and 5A-5B.

Referring to FIG. 4A, an amount of ballast current I(bal) that ballast actuator 213 may draw from the output terminal (VMID) to ground is an amount that is adjustable from 0 amps up to the ballast limit (ILim). By way of example, Current source 332 in ballast actuator 213 may receive Icc constant current generator 341, which in turn may be driven by controller 121 in the form of a digital word. Ballast setting "Ballast" is a predetermined user setting that represents the setpoint for the ballast limit (ILim). The ballast limit (ILim) may be adjusted by setting a different value for ballast setting "Ballast," as illustrated in the example of FIG. 4A.

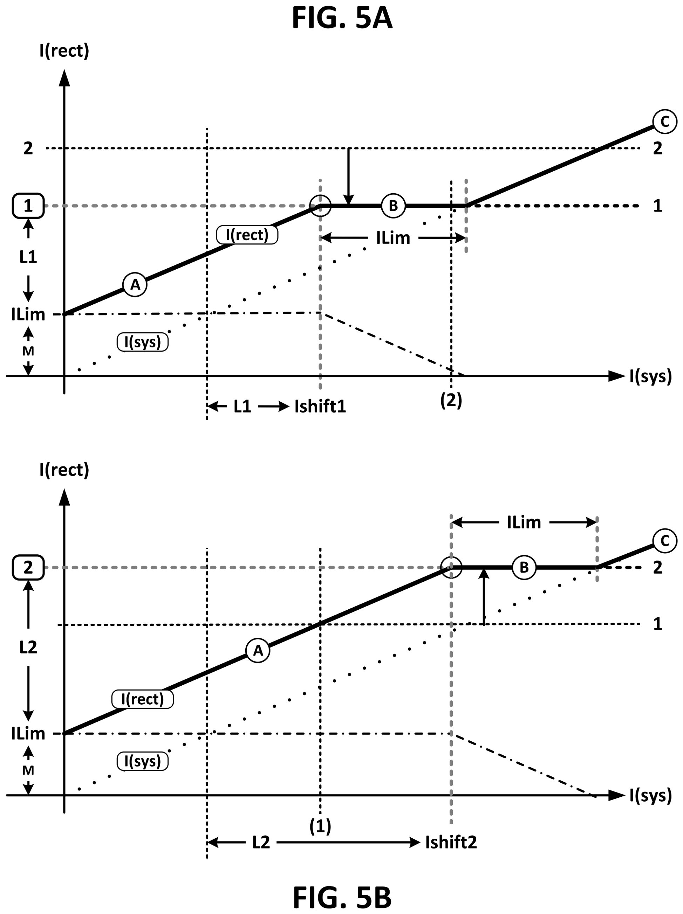

Referring to FIGS. 5A-5B, illustrated is an example in the transfer characteristics graphs of an adjustment of the transition point where the current level of rectified current I(rect) reaches shift current I(shift). By way of example, current sink 344 may receive, from controller 121 in the form of a digital word "Shift", a shift current setting for shift current I(shift). The shift current setting for shift current I(shift) is a predetermined user setting that represents a setpoint for shift current I(shift). The shift current setting for shift current I(shift) is a programmable value.

Shift current I(shift) may be adjusted by changing the shift current setting for shift current I(shift) to a different value, as illustrated in the example of FIGS. 5A-5B. For instance, changing the shift current setting for shift current I(shift) to a value Ishift1 may cause the setpoint for shift current I(shift) to occur at current level (1), as illustrated in the example of FIG. 5A. Current level (1) in the transfer characteristics graphs of FIGS. 5A-5B represents a current level on the horizontal rectified current I(rect) and a corresponding current level on the vertical system current I(sys).

As another example, changing the shift current setting for shift current I(shift) to a different value Ishift2 may cause the setpoint for shift current I(shift) to occur at current level (2), as illustrated in the example of FIG. 5B. Current level (2) in the transfer characteristics graphs of FIGS. 5A-5B represents another current level on the horizontal rectified current I(rect) and another corresponding current level on the vertical system current I(sys). Although shift current settings Ishift1 and Ishift2 are illustrated, those skilled in the art will appreciate there may be other scale factors for shift current I(shift) in addition to the shift current scale factors Ishift1 and Ishift2.

Referring to FIGS. 5A-5B, lowering the shift current setpoint (shift) may simultaneously lower the transition point where the current level of rectified current I(rect) reaches shift current I(shift). Similarly, raising the shift current setpoint (shift) may simultaneously raise the transition point where the current level of rectified current I(rect) reaches shift current I(shift). However, the span of segment "B" is unaffected by the shift current setpoint (shift).

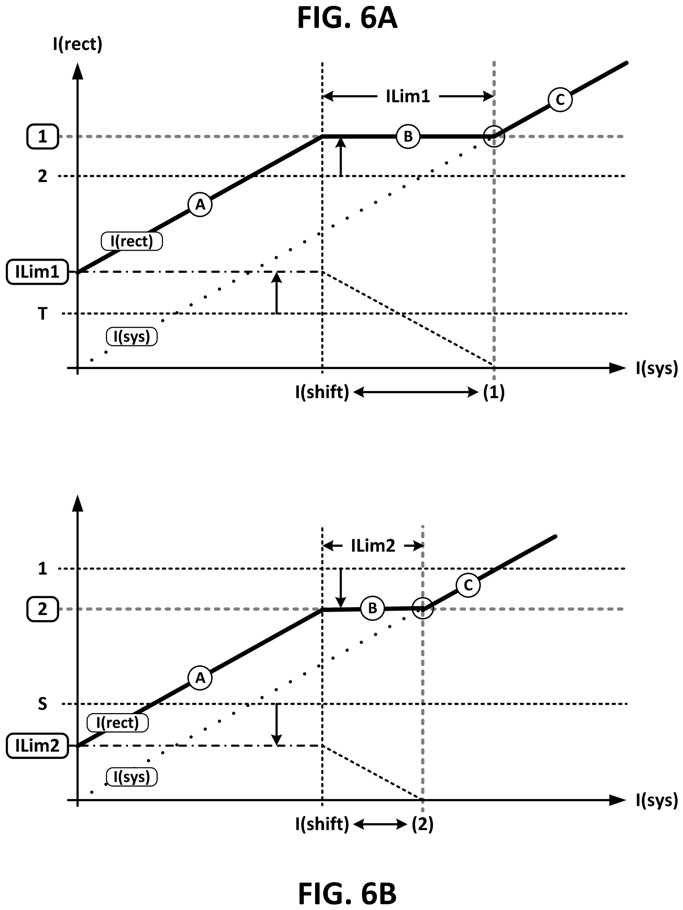

Referring to FIGS. 6A-6B, segment "B" is a flat region in the transfer characteristics graphs. The span of the flat region is an adjustable span, as illustrated in FIGS. 6A-6B. In the flat region, rectified current I(rect) remains constant despite any variance or noise in system current I(sys). By way of example, current sink 343 may receive a ballast setting from controller 121 in the form of a digital word Ballast. The ballast setting is a predetermined user setting that represents a ballast setpoint ILim.

Constant current I(cc) may be adjusted by setting a different value for the ballast limit (ILim), as illustrated in the example of FIGS. 6A-6B. The value for the ballast limit (ILim) is a programmable value. Although ballast settings ILim1 and ILim2 for the ballast limit (ILim) are illustrated, those skilled in the art will appreciate there may be other settings for the ballast limit (ILim) in addition to constant current scale factors ILim1 and ILim2.

In response to processing ballast setting ILim1, ballast regulator 214 may trigger ballast actuator 213 to extend the span of segment "B" from the amount of shift current I(shift) to current level (1), equal to I(shift)+ILim1, as illustrated in the example of FIG. 6A. In response to processing ballast current setting ILim2 differing from the example of FIG. 6A, ballast regulator 214 may trigger ballast actuator 213 to extend the span of segment "B" from the amount of shift current I(shift) to current level (2), equal to I(shift)+ILim2, as illustrated in the example of FIG. 6B. The span of segment "B" is wider in FIG. 6A than in FIG. 6B.

Along with varying the amount of shift current I(shift) between current levels (1) and (2), the adjustment in the value for the ballast limit (ILim) may also cause a modification of the ballast limit (ILim) between current levels (S) and (T) illustrated in the example of FIGS. 6A-6B. The current level of the ballast limit (ILim) is higher in FIG. 6A than in FIG. 6B. Widening the span of segment "B" may simultaneously raise the current level of the ballast limit (ILim). Narrowing the span of segment "B" may simultaneously lower the current level of the ballast limit (ILim).

As an improvement in the art, power transceiver 110 implements current regulator 112 that can cancel out variations and noise in a system current I(sys), improving modulation fidelity. The current regulator 112 architecture can sense variation and noise in the system current I(sys), tracking out the variations and noise to present a desired load to a power converter 111. This load may be a constant current, or a modulated current providing a signal to an upstream wireless power transmitter.

Those skilled in the art will also appreciate the arrangement or interconnection of components such as "coupled," "connected," "on," "under," or similar wording allows for indirect connections, or intervening components or layers.

Referred to herein, any of the terms "electrically connected directly," "electrically directly connected" and "directly electrically connected" means that two or more components are connected along a conductive path without any intermediary component therebetween.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, and so forth.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

**Claims**

**1.** An apparatus comprising:

a first circuit configured to generate, in response to measuring an amount of rectified current flowing along a pathway from an input terminal to an output terminal, a sense signal that indicates the amount of the rectified current;

a second circuit configured to draw, from the output terminal, an amount of a ballast current from the rectified current; and

a third circuit configured to:

perform a comparison of the sense signal with a reference signal, and

trigger, in response to the comparison indicating that the rectified current is at or above a transition point where a current level of the rectified current reaches a shift current, the second circuit configured to decrease the amount of the ballast current drawn from the output terminal.

2. The apparatus according to claim 1, wherein:

the first circuit comprises a current sense circuit,

the second circuit comprises a ballast actuator, and

the third circuit comprises a ballast regulator.

3. The apparatus according to claim 1 or 2, wherein the second circuit is configured to draw, from the output terminal, the amount of the ballast current in proportion to the amount of the rectified current.

4. The apparatus according to any one of the claims 1 to 3, wherein the second circuit is configured to receive a ballast scale factor that designates a ballast limit, the ballast limit being the maximum amount of the ballast current drawable from the output terminal.

5. The apparatus according to any one of the claims 1 to 4, wherein the second circuit is configured to draw, in response to the comparison indicating that the rectified current is below a shift current setpoint, the maximum amount of the ballast current drawable from the output terminal.

6. The apparatus according to any one of the claims 1 to 5, wherein

the third circuit is configured to receive a ballast scale factor that designates a ballast limit, the ballast limit being the maximum amount of the ballast current drawable from the output terminal;

wherein in particular

the second circuit is configured to receive a ballast scale factor that designates a ballast limit, the ballast limit being the maximum amount of the ballast current.

7. The apparatus according to any one of the claims 1 to 6, wherein the second circuit configured to trigger, in response to drawing the amount of the ballast current from the rectified current, the rectified current to become unaffected by noise in a system current.

8. The apparatus according to claim 7, wherein the second circuit is configured to draw, from the output terminal, the amount of the ballast current in inverse proportion to an amount of the noise.

9. The apparatus according to claim 7 or 8, wherein the second circuit configured to cause the rectified current to become unaffected by the noise in a region of the system current that extends from the transition point to where an amount of the system current equals the sum total of a shift current setpoint plus a constant current setpoint.

10. The apparatus according to any one of the claims 7 to 9, further comprising: a voltage regulator configured to maintain, in response to converting the system current into a regulated voltage, the regulated voltage at a voltage level.

11. The apparatus according to any one of the claims 1 to 10, further comprising: an ILoad circuit configured to draw, at the input terminal, an amount of load current from the rectified current; and/or further comprising a power converter configured to convert, in response to wirelessly receiving electric power, the electric power into the rectified current.

**12.** A method comprising:

measuring, by a first circuit, an amount of rectified current flowing along a pathway from an input terminal to an output terminal;

generating, by the first circuit in response to measuring an amount of rectified current, a sense signal that indicates the amount of the rectified current;

performing, by a third circuit, a comparison of the sense signal with a reference signal;

drawing, from the output terminal by a second circuit, an amount of a ballast current from the rectified current; and

triggering, by the third circuit in response to the comparison indicating that the rectified current is at or above a transition point where a current level of the rectified current reaches a shift current, the second circuit to decrease the amount of the ballast current drawn from the output terminal.

**13.** The method according to claim 12, further comprising:

causing, by the second circuit in response to drawing the amount of the ballast current from the rectified current, the rectified current to become unaffected by noise in a system current.

**14.** The method according to claim 13, further comprising at least one of the following features:

(A) the system current comprises the rectified current minus the ballast current;

(B) the method further comprises

drawing, by the second circuit from the output terminal, the amount of the ballast current in inverse proportion to an amount of the noise;

(C) the method further comprises

outputting, from the output terminal, the system current comprising the rectified current minus the ballast current; and

(D) the method further comprises

causing, by the second circuit, the rectified current to become unaffected by the noise in a region of the system current that extends from the transition point to where an amount of the system current equals the sum total of a setpoint for a shift current plus a setpoint for a constant current.

**15.** A device comprising:

a transceiver configured to:

convert, in response to wirelessly receiving electric power, the electric power into a rectified current;

generate, in response to measuring an amount of the rectified current flowing along a pathway from an input terminal to an output terminal, a sense signal that indicates the amount of the rectified current;

draw, from the output terminal, an amount of a ballast current from the rectified current;

perform a comparison of the sense signal with a reference signal; and

trigger, in response to the comparison indicating that the rectified current is at or above a transition point where a current level of the rectified current reaches a shift current, a circuit to decrease the amount of the ballast current drawn from the output terminal.

# FIG. 1 — Power Transfer System 100

EP 4 787 667 A2

# FIG. 2

EP 4 787 667 A2

# FIG. 3A

EP 4 787 667 A2

# FIG. 3B

Current Sense Circuit 212

Current Regulator 112(B)

ILoad Circuit 211

Ballast Regulator 214

Ballast Actuator 213(B)

V(dd)

En(load) — B31

Q31 — I(load)

Load — Bias Gen 311 — V(bias)

Q32

Q33

VRECT — I(rect)

V(sns)

Rsns — I(sns)

R31 — R33

V(const) — ② — Offset — ⑤

R32 — Offset Gen 321 — R34

③ — ⑦

V(shift)

VMID — I(sys)

I(bal)

Q34 — I(ramp)

V(dd)

M — Current Source 332

I(cc)/M

Q35

Q36

Sns — — Amp31 — Level Shifter 331

Ref — +

K — Current Sink 343

L — Current Sink 344

I(cc)/K — I(shift)/L

I(cc) — I(shift) — I(cc)

Constant Current Gen 341

Ballast

Shift — Shift Current Gen 342

EP 4 787 667 A2

# FIG. 4A

$$I(rect) = I(sys) + ILim - I(ramp)$$

# FIG. 4B

# FIG. 5A

# FIG. 5B

# FIG. 6A

# FIG. 6B